(19)

**Europäisches Patentamt**
**European Patent Office**
**Office européen des brevets**

(11) **EP 3 422 040 B1**

(12) **EUROPÄISCHE PATENTSCHRIFT**

(45) Veröffentlichungstag und Bekanntmachung des Hinweises auf die Patenterteilung:
**11.08.2021 Patentblatt 2021/32**

(51) Int Cl.:
*G01S 7/02* *(2006.01)*  *G01S 7/04* *(2006.01)*
*G01S 7/06* *(2006.01)*  *G01S 7/10* *(2006.01)*
*G01S 7/34* *(2006.01)*  *G01S 7/40* *(2006.01)*
*G01S 13/95* *(2006.01)*

(21) Anmeldenummer: **17178098.4**

(22) Anmeldetag: **27.06.2017**

(54) **VERFAHREN UND VORRICHTUNG ZUR DETEKTION VON ZONEN MIT STARKEM NIEDERSCHLAG**

METHOD AND DEVICE FOR DETECTING ZONES WITH HEAVY PRECIPITATION

PROCÉDÉ ET DISPOSITIF DE DÉTECTION DE ZONES À FORTE PRÉCIPITATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.01.2019 Patentblatt 2019/01**

(73) Patentinhaber: HENSOLDT Sensors GmbH
**82024 Taufkirchen (DE)**

(72) Erfinder:
• **Nagel, Dieter**
 **89155 Erbach (DE)**
• **Firl, Falko**
 **89584 Ehingen (DE)**
• **Becker, Michael**
 **85084 Reichertshofen (DE)**

(74) Vertreter: **LifeTech IP**
 **Spies & Behrndt Patentanwälte PartG mbB**
 **Elsenheimerstraße 47a**
 **80687 München (DE)**

(56) Entgegenhaltungen:
• **"RDR-4B, Forward Looking Windshear Detection/Weather Radar System, User's Manual with Radar Operating Guidelines, ACS-5082, 006-18167-0000 Rev.6-02/2004", Honeywell, 15001 N.E. 36th Street, P.O. Box 97001, Redmond, Washington USA , 6. Juni 2011 (2011-06-06), Seiten 1-106, XP055436687, USA Gefunden im Internet: URL:http://www.faam.ac.uk/index.php/faam-d ocuments/science-instruments/915-rdr-4b-do ppler-radar-manual/file [gefunden am 2017-12-19]**
• **David Marconnet, Christian Norden, Laurent Vidal: "Optimum use of weather radar", Safety first#22, The Airbus safety magazine; GS 420.0045 Issue 22 , 29. Juli 2016 (2016-07-29), Seiten 022-043, XP055436672, Blagnac Cedex/France Gefunden im Internet: URL:http://www.smartcockpit.com/docs/optim um-use-of-weather-radar-airbus-safety-firs t-nr22.pdf [gefunden am 2017-12-19]**
• **NAGEL DIETER: "Detection of rain areas with airborne radar", 2017 18TH INTERNATIONAL RADAR SYMPOSIUM (IRS), GERMAN INSTITUTE OF NAVIGATION-DGON, 28. Juni 2017 (2017-06-28), Seiten 1-7, XP033142213, DOI: 10.23919/IRS.2017.8008094 [gefunden am 2017-08-10]**

EP 3 422 040 B1

**Beschreibung**

Die vorliegende Erfindung bezieht sich auf ein Verfahren und eine Vorrichtung zur Detektion von Zonen mit starkem Niederschlag (z.B. Regen) und auf insbesondere eine luftgestützte Detektion von Gewitterzellen mit einer Radaranlage zur Geländeerfassung.

Hintergrund

Häufig sollen Luftfahrzeuge (Flugzeuge, Hubschrauber, Luftschiffe, Segelflieger, etc.) Gebiete mit starkem Regen oder auch mit Gewitterzonen vermeiden oder sollen zumindest einen minimalen Abstand zu starken Gewitterzellen einhalten. Das Einhalten eines solchen Mindestabstandes, der beispielsweise 3,7 km betragen kann (NM: Nautische Meile; 1 NM = 1,85 km), führt zu erheblichen Einschränkungen und Randbedingungen, die der Pilot während des Tages- und Nachtbetriebes ständig zu überwachen hat. Insbesondere bei eingebetteten Gewitterzellen ist ein erheblicher Aufwand erforderlich, um zu solchen Bereichen stets einen sicheren Abstand zu gewährleisten.

Wenn das Luftfahrzeug mit einem speziellen Regenradar ausgerüstet ist, stellt dies in der Regel kein großes Problem dar. Viele Luftfahrzeuge sind aber nicht mit einem spezifischen Regenradar ausgerüstet, sodass eine zuverlässige Detektion von Regionen mit Starkregen ein großes Problem darstellt. Insbesondere Regionen mit extrem starken Regenmengen (z.B. Regenmengen von mehr als 50 mm/h) sollten vermieden werden, um die Flugsicherheit nicht zu gefährden. Konventionelle Regenradar-Systeme werden in: XP55436687, "RDR-4B, Forward Looking Windshear Detection/Weather Radar System, User's Manual with Radar Operating Guidelines, ACS-5082, 006-18167-0000 Rev.6-02/2004; und in: XP55436672, David Marconnet et. al "Optimum use of weather radar", Safety first#22, The Airbus safety magazine; GS 420.0045 Issue 22, beschrieben.

Daher besteht ein Bedarf nach einer einfachen und zuverlässigen Möglichkeit, um gegebene Ressourcen in einem Luftfahrzeug zu nutzen, um zuverlässig Zonen mit starkem Regen zu detektieren.

Zusammenfassung

Zumindest ein Teil der obengenannten Probleme wird durch ein Verfahren nach Anspruch 1 und eine Vorrichtung nach Anspruch 8 gelöst. Die abhängigen Ansprüche definieren weitere vorteilhafte Ausführungsformen der vorliegenden Erfindung.

Die vorliegende Erfindung bezieht sich auf ein Verfahren zur Detektion einer Zone mit starkem Niederschlag mittels einer Radarsignal-sendenden Radaranlage. Die Radaranlage umfasst eine Anzeige und ist auf einem Luftfahrzeug zur Erfassung eines Geländes (z.B. Boden) vorgesehen. Das Verfahren umfasst die Schritte:

- Einstellen eines Elevationswinkels in Abhängigkeit von einer Flughöhe des Luftfahrzeuges und/oder von einer auf der Anzeige darstellbaren Reichweite einer Radarerfassung durch die Radaranlage;
- Empfangen von den reflektierten Radarsignalen aus der Zone mit starkem Niederschlag;
- Ändern einer Verstärkung der empfangenen Radarsignale in Abhängigkeit von der darstellbaren Reichweite und/oder einer geschätzten Entfernung zu der Zone mit starkem Niederschlag, um eine Sättigung bei der Radarerfassung zu vermeiden;
- Ermitteln eines Reflexionsfaktors und basierend darauf einer Niederschlagsmenge;
- Ermitteln der Zone mit starkem Niederschlag basierend auf dem Reflexionsfaktor für die empfangenen Radarsignale; und
- Darstellen der Zone mit starken Niederschlag auf der Anzeige, wobei das Ermitteln der Niederschlagsmenge eine Korrektur des Reflexionsfaktors basierend auf einer Dämpfung des Radarsignals in der Zone mit starkem Niederschlag umfasst und das Ermitteln der Dämpfung folgende Schritte umfasst: Ermitteln einer Vorderfront der Zone mit starkem Niederschlag, Ermitteln einer Niederschlagsmenge an der Vorderfront der Zone mit starkem Niederschlag, Abschätzen, ob die ermittelte Niederschlagsmenge eine Mindestdämpfung des Radarsignals bewirkt und, wenn ja, Berücksichtigen der Dämpfung bei der Ermittlung des Reflexionsfaktors.

Das Ermitteln der Zone mit starkem Niederschlag kann insbesondere deren Position und Ausdehnung, aber auch die Zuordnung der entsprechenden Niederschlagsmenge(n) umfassen. Bei dem Niederschlag kann es sich um jede Form von Niederschlag handeln. Im Folgenden wird meist von Regen ausgegangen, es kann sich aber um Hagel, Schnee, Graupel, etc. handeln. Insbesondere nutzen Ausführungsbeispiele zur Ausgabe der Regenmenge den sogenannten meteorologischen Z-Faktor, der den Reflexionsfaktor darstellt und häufig in einer logarithmischen Skala als dBZ (=10*log Z) angegeben wird. Da die Reflexion in der Luft proportional zur Niederschlagsmenge ist, misst dieser Faktor direkt die Regenmenge. Die Darstellung des meteorologischen Z-Faktor oder des entsprechenden dBZ-Wertes erfolgt in einem sogenannten dBZ-Display als Anzeige, mit dessen Hilfe die Wettersituation in der Umgebung abgeschätzt werden kann. Die Anzeige kann beispielsweise über entsprechende Grau- oder Farbtöne erfolgen, die beispielsweise Regenmengenbereiche darstellen.

Der Z-Faktor kann aus den Radarsignalen berechnet werden. Das Ermitteln der Zone mit starkem Regen kann beispielsweise derart erfolgen, dass den lokalen Reflexionsfaktoren bestimmte Grautonstufen zugeordnet werden. So kann beispielsweise eine Einteilung in bestimmte Bereiche erfolgen, die jeweils eine Grautonstufe erhalten (alternativ kann ebenfalls eine farbliche Zuordnung der einzelnen Bereiche erfolgen). Daher ist die Zone mit starkem Regen derart definiert, dass innerhalb dieses Bereiches der meteorologische Reflexionsfaktor einen unteren Schwellenwert überschritten hat, wobei weitere Schwellenwerte genutzt werden können zum Ermitteln, wie hoch die Niederschlagsmenge in der Zone ist.

Um die Zone mit Starkregen mit einem korrekten Niveau darzustellen, ist es wichtig, dass Streusignale das Ergebnis nicht verfälschen. Der Elevationswinkel kann beispielsweise derart eingestellt werden, dass Reflexionssignale von dem Gelände (z.B. Boden) das Ermitteln der Zone mit starkem Niederschlag nicht verfälschen. Prinzipiell können solche Reflexionen vorhanden sein, sie sollten aber unterhalb einer tolerierbaren Schwelle liegen, sodass deren Einfluss vernachlässigbar wird. Daher sollten nur kleinere Winkel genutzt werden, die das Radarsignal nach unten richten, während nach oben gerichtete Radarsignale zu bevorzugen sind, um wie gewünscht die Gewitterzellen zu detektieren. Das Radarsignal kann jedoch auch in einem gewissen Maße nach unten gerichtet werden, zumindest solange, wie sichergestellt werden kann, dass das Radarsignal keinen Bodenkontakt hat bzw. der Bodenkontakt in einer Entfernung liegt, die außerhalb der eingestellten Darstellungsreichweite liegt.

Optional kann außerdem die Verstärkung derart eingestellt werden, dass auf der Anzeige ein Resultat dargestellt wird, welches ein Mindestmaß an Signaldynamik aufweist.

Das obengenannte Ermitteln der Niederschlagsmenge kann über eine Formel oder eine tabellarische Klassifizierung durchgeführt werden. Die obengenannte Korrektur des Reflexionsfaktors basierend auf einer Dämpfung des Radarsignals in der Zone mit starkem Niederschlag kann insbesondere wichtig sein, wenn die Zone auch in der Tiefe erfasst werden soll, um so beispielsweise eine Gesamtniederschlagsmenge in der gesamten Zone abschätzen zu können.

Der Schritt des Einstellens der Verstärkung kann ebenfalls in Abhängigkeit von der so ermittelten Dämpfung durchgeführt werden.

Optional umfasst das Verfahren weiter zumindest einen der folgenden Schritte:

- Auswählen einer Option zur Geländeerfassung an der Radaranlage,
- Deaktivieren einer Bodenstabilisierung,
- Ändern einer dargestellten Reichweite der Radaranlage.

Beispielsweise kann das Ändern der dargestellten Reichweite eine Reichweite von bis zu 20 nautischen Meilen oder eine Reichweite von bis zu 40 nautischen Meilen entsprechen.

Die Reihenfolge der genannten Schritte kann beliebig sein oder ist nur insoweit eingeschränkt, wie eine bestimmte Abfolge von Verfahrensschritte für das Erreichen des gewünschten Effektes zwingend ist.

Dieses Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einer Steuereinheit läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein, die einen entsprechenden Mikroprozessor aufweist, der einen Software-Code ausführen kann.

Die vorliegende Erfindung bezieht sich auch auf eine Vorrichtung für eine Radarsignal-sendende Radaranlage nach Anspruch 8. Die Radaranlage umfasst eine Anzeige und ist auf einem Luftfahrzeug zur Erfassung eines Geländes vorgesehen oder installierbar. Die Vorrichtung umfasst: ein Einstellmodul, ein Empfangsmodul, ein Steuermodul, ein Berechnungsmodul und ein Ausgabemodul. Das Einstellmodul ist ausgebildet zum Einstellen eines Elevationswinkels in Abhängigkeit von einer Flughöhe des Luftfahrzeuges und/oder einer auf der Anzeige darstellbaren Reichweite einer Radarerfassung durch die Radaranlage. Das Empfangsmodul ist ausgebildet zum Empfangen von den reflektierten Radarsignalen aus der Zone mit starkem Niederschlag. Das Steuermodul ist ausgebildet zur Steuerung einer Verstärkung der empfangenen Radarsignale in Abhängigkeit von der darstellbaren Reichweite und/oder einer geschätzten Entfernung zu der Zone mit starkem Niederschlag, um eine Sättigung bei der Radarerfassung zu vermeiden. Das Berechnungsmodul ist ausgebildet zum Ermitteln eines Reflexionsfaktors und basierend darauf einer Niederschlagsmenge, und zum Ermitteln der Zone mit starkem Niederschlag basierend auf dem Reflexionsfaktor für die empfangenen Radarsignale. Das Ausgabemodul ist ausgebildet zum Ausgeben von Daten zur ermittelten Zone mit starkem Niederschlag. Die Ausgabe kann beispielsweise an die Anzeige erfolgen. Die Ausgabe kann einen ermittelten dBZ-Wert an die Anzeige ausgeben, um ihn in Abhängigkeit von der Entfernung und des Azimutwinkels darzustellen, wobei das Berechnungsmodul ausgebildet ist, bei dem Ermitteln der Niederschlagsmenge eine Korrektur des Reflexionsfaktors basierend auf einer Dämpfung des Radarsignals in der Zone mit starkem Niederschlag zu berücksichtigen und für das Ermitteln der Dämpfung folgende Schritte auszuführen: Ermitteln einer Vorderfront der Zone mit starkem Niederschlag, Ermitteln einer Niederschlagsmenge an der Vorderfront der Zone mit starkem Niederschlag, Abschätzen, ob die ermittelte Niederschlagsmenge eine Mindestdämpfung des Radarsignals bewirkt und, wenn ja, Berücksichtigen der Dämpfung bei der Ermittlung des Reflexionsfaktors.

Die Vorrichtung kann Teil einer Steuereinheit (z.B. für die vorhandene Bordradaranlage) sein, wobei zumindest einige Module auch durch Software implementiert sein können.

Die vorliegende Erfindung bezieht sich auch auf eine Radaranlage mit der genannten Vorrichtung, wobei die Radaranlage ausgebildet ist, um Radarsignale mit einer Wellenlänge von weniger als 8 cm oder weniger als 5 cm und insbesondere im X-Band oder im Ku-Band oder im K-Band oder im Ka-Band zur Radarerfassung zu nutzen.

Die zuvor genannten Ausführungsbeispiele lösen somit zumindest einen Teil der eingangs genannten Probleme, durch eine gezielte Nutzung einer bestehenden Radaranlage (z.B. ein Bordradar) zur Detektion und Lokalisierung von Gewitterzonen und Starkregenzonen, ohne auf spezifische Regenradaranlagen angewiesen zu sein. Insbesondere lösen Ausführungsbeispiele das Problem der Dämpfung des Radarsignals durch den Niederschlag. Dieses Problem stellt sich bei speziellen Regenradaranlagen nicht, da diese ein Radarsignal nutzen, das kaum oder wenig durch den Regen gedämpft wird. Dazu arbeiten diese Radaranlagen beispielsweise im S-Band bei einer Wellenlänge $\lambda$ von beispielsweise 10 cm oder mehr, wo die Dämpfung vernachlässigbar ist.

Außerdem ist es möglich, dass gemäß Ausführungsbeispielen eine manuelle Nachjustierung je nach Helligkeit des Displays ermöglicht wird. So können alle genannten Module/Komponenten der Vorrichtung entsprechende Nutzerschnittstellen aufweisen oder an diese koppeln, um eine Interaktion mit dem Nutzer (z.B. Piloten) zu ermöglichen.

Ausführungsbeispiele bieten die folgenden Vorteile:

- Der Pilot erhält nach einer Auswahl des entsprechenden Modus (z.B. des RBGM-Modus; RBGM= real beam ground mapping, Realstrahlgeländeerfassung) und der Einstellung eines geeigneten Elevationswinkels durch die Anzeige eine gute Übersicht über die Wetterlage und die Umgebung, um entsprechende Beurteilungen vornehmen zu können.
- Außerdem wird eine bessere Übersicht durch die Ausgabe des dBZ-Wertes auf dem Display in Abhängigkeit von der Entfernung und dem Azimut erreicht.
- Eine weitere manuelle Nachjustierung über entsprechende Schnittstellen liefert schließlich ein optimales Ergebnis.

## Kurzbeschreibung der Figuren

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.

Fig. 1.   zeigt ein Flussdiagramm eines Verfahrens zur Detektion von Zonen mit starkem Niederschlag gemäß Ausführungsbeispielen der vorliegenden Erfindung.

Fig. 2   veranschaulicht schematisch die Detektion von Zonen mit starkem Niederschlag gemäß Ausführungsbeispielen der vorliegenden Erfindung.

Fig. 3   zeigt eine Draufsicht auf die Situation, wie sie in der Fig. 2 dargestellt ist.

Fig. 4   zeigt beispielhaft eine Darstellung des durch die Radaranlage erfassten Zone mit starkem Regen.

Fig. 5   zeigt eine Darstellung zur Ermittlung des minimalen Elevationswinkels.

## Detaillierte Beschreibung

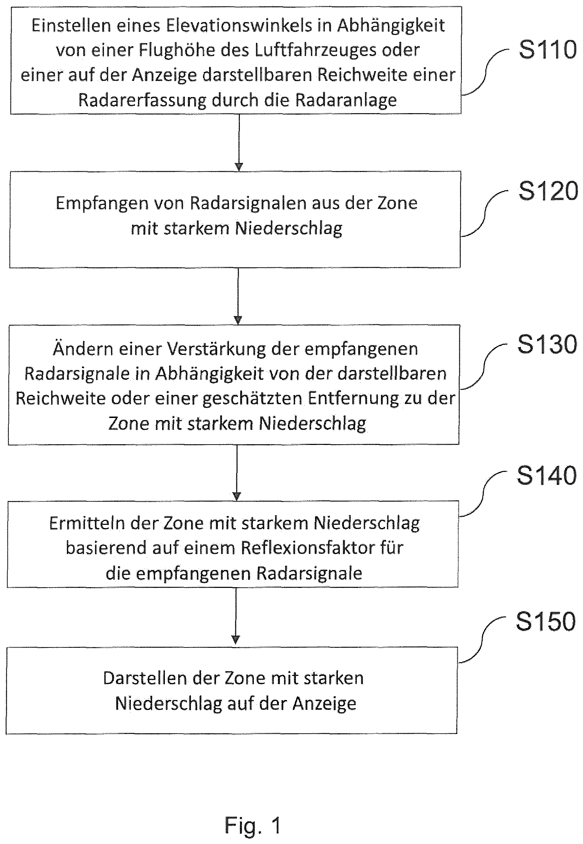

**Fig. 1** zeigt ein Flussdiagramm für ein Verfahren zur Detektion einer Zone mit starkem Niederschlag mittels einer Radarsignal-sendenden Radaranlage. Die Radaranlage umfasst eine Anzeige und ist auf einem Luftfahrzeug zur Erfassung eines Geländes vorgesehen (dort installiert oder zumindest dort installierbar). Das Verfahren umfasst die Schritte:

- Einstellen S110 eines Elevationswinkels in Abhängigkeit von einer Flughöhe des Luftfahrzeuges oder einer auf der Anzeige darstellbaren Reichweite einer Radarerfassung durch die Radaranlage;
- Empfangen S120 von den reflektierten Radarsignalen aus der Zone mit starkem Niederschlag;
- Ändern S130 einer Verstärkung der empfangenen Radarsignale in Abhängigkeit von der darstellbaren Reichweite oder einer geschätzten Entfernung zu der Zone mit starkem Niederschlag, um eine Sättigung bei der Radarerfassung zu vermeiden;

- Ermitteln S140 der Zone mit starkem Niederschlag basierend auf einem Reflexionsfaktor für die empfangenen Radarsignale; und
- Darstellen S150 der Zone mit starken Niederschlag auf der Anzeige.

Es versteht sich, dass das gezeigte Verfahren ebenfalls in einer Steuereinheit (zum Beispiel von dem Bordradar eines Flugzeuges) implementiert sein kann. Dazu kann beispielsweise jeder der gezeigten Verfahrensschritte als ein Modul umgesetzt werden, wobei die Module beispielsweise durch Software entsprechend ihrer Funktion implementiert sein können und über entsprechende Schnittstellen auch manuell steuerbar sein können.

Das Verfahren kann ebenfalls Computer-implementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

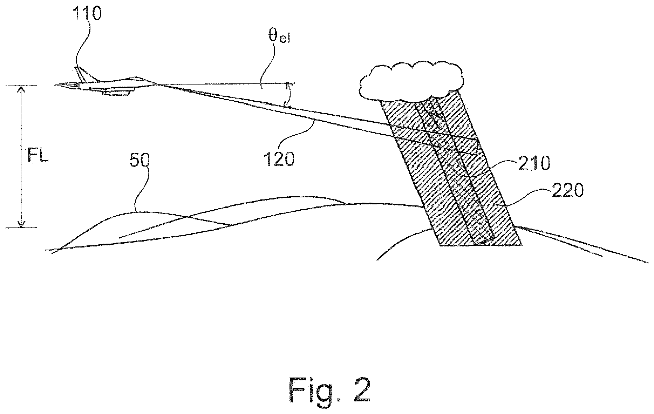

**Fig. 2** zeigt eine Ansicht auf ein Gelände 50, über welchem sich in einer Flughöhe FL ein Flugzeug 110 (oder ein beliebiges anderes Luftfahrzeug) befindet. In oder an dem beispielhaften Flugzeug 110 befindet sich eine Radaranlage (z.B. ein Bordradar wie z.B. das Captor-M Radar des Eurofighters). Die Radaranlage sendet Radarstrahlen 120 in einem Elevationswinkel $\Theta_{el}$ aus (gemessen über der Horizontalen, negative Winkel zeigen z.B. nach unten, positive nach oben), um eine Zone mit starkem Regen 210 in einem Regengebiet 220 zu erfassen (z.B. eine eingebettete Gewitterzone). Das gesamte Regengebiet 220 kann auch eine Starkregenzone 210 sein. Die zu erfassende Zone 210 muss nicht zwingenderweise ein Starkregengebiet sein. Es ist ebenfalls möglich, dass es sich bei dem Niederschlag um Hagel, Schnee, Graupel oder andern Niederschlag handelt.

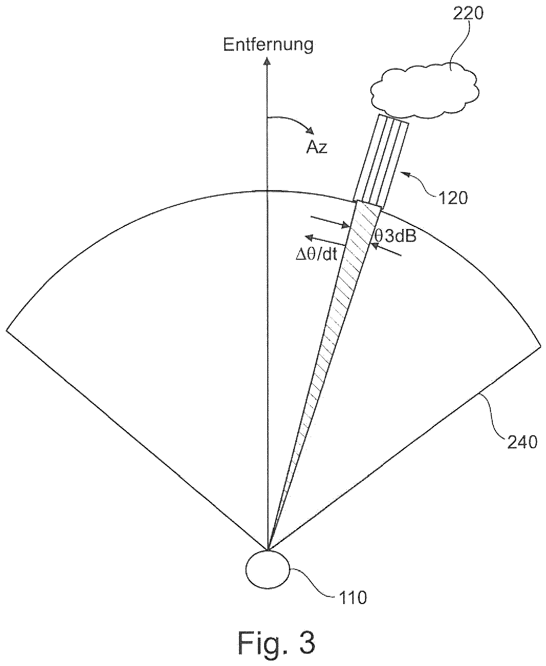

**Fig. 3** zeigt eine Draufsicht auf die Situation, wie sie in der Fig. 2 dargestellt ist. Wiederum befindet sich in dem beispielhaften Regengebiet 220 eine potenziellen Gewitterzelle 210 (nicht zu sehen in Fig. 2) in einer bestimmten Entfernung von dem Flugzeug 110. Das Regengebiet 220 wird dabei in einem Azimutwinkel $\Theta_{az}$ durch die Radarstrahlen 120 erfasst bzw. gescannt (abgetastet). Dabei werden die Radarstrahlen 120 beispielsweise impulsartig durch eine Vielzahl von sogenannten Bursts gesendet und nach der Reflexion empfangen. Außerdem zeigt die Fig. 3 beispielhaft einen Bereich 240, der einen Mindestabstand vom Flugzeug 110 definiert und der aus Sicherheitsgründen zu einem potentiellen Starkregengebiet 210 eingehalten werden soll.

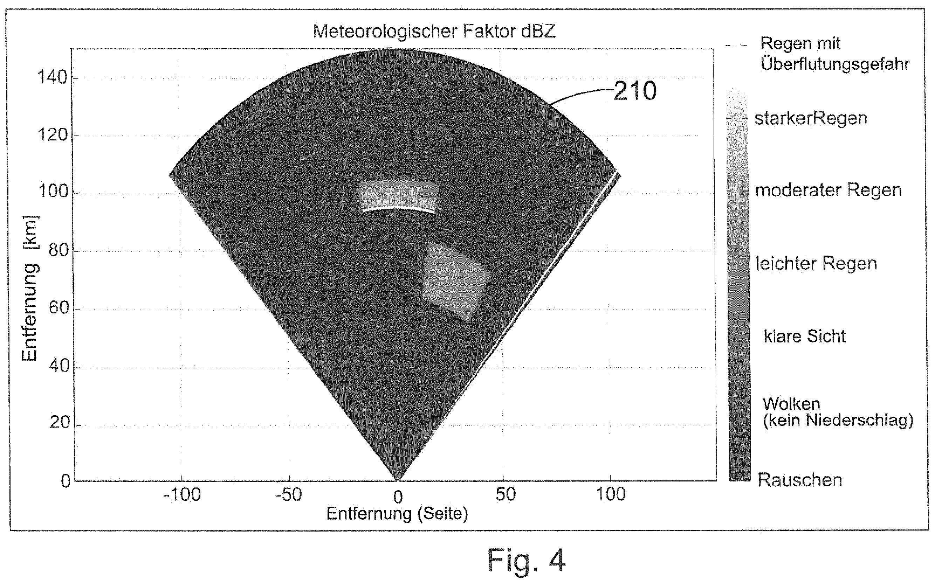

**Fig. 4** zeigt beispielhaft eine Darstellung der durch die Radaranlage erfassten Zone mit starkem Regen 210, wie es beispielweise auf der Anzeige der Radaranlage dargestellt wird. Gemäß Ausführungsbeispielen wird die Verstärkung (Gain) derart eingestellt, dass in dem Radarbild in Abhängigkeit von der dargestellten Reichweite und/oder einer geschätzten Entfernung zu der Zone mit starkem Regen 210 ein Mindestmaß an Dynamik vorhanden ist. Die geschätzte Entfernung kann beispielsweise über eine Schnittstelle durch den Piloten eingegeben werden oder kann von anderen Quellen stammen (z.B. erhaltende Warninformationen). Insbesondere soll eine Sättigung in der Anzeige vermieden werden und die Starkregenzone 210 soll auf dem Radarschirm klar sichtbar sein.

Da gemäß Ausführungsbeispielen eine Radaranlage genutzt wird, die nicht speziell zur Regendetektion konzipiert ist, kommt es im Vergleich zu Regenradaranlagen zu einer verstärkten Dämpfung des Radarsignales. Dies führt dazu, dass zum Beispiel eine Gewitterzelle zum Anfang sehr hell dargestellt wird und dass der Grauton mit einer zunehmenden Tiefe der Zelle dunkler wird. Dieser Dämpfungseffekt beginnt bei Regenraten von ungefähr 10 mm/h (41 dBZ), ist aber nur auf Anzeigen für Gewitterzellen mit sehr großen Regenraten und sehr großen Tiefen sichtbar. Wenn beispielsweise eine Gewitterzelle mit einer Regenrate von 100 mm/h (55 dBZ) und einer Tiefe von 14,8 km am Vorderrand zunächst als sehr hell dargestellt wird (nahezu weiß wegen der starken Reflexion), wird diese Zelle zunehmend dunkler bis hin zu schwarz. Diese schwarze Anzeige bedeutet jedoch nicht das Ende der Gewitterzelle, sondern ist lediglich ein Effekt der Dämpfung des ausgesendeten und zurückkehrenden Radarsignals.

Andererseits, wenn die Regenraten nicht so hoch sind und daher die Dämpfung bei dem Regen nur ein moderates Niveau haben, sind die Gewitterzellen hintereinander sichtbar, wobei die weiter entfernten Zellen mit einem größeren Dunkelton dargestellt werden, da sich diese Zellen in einer größeren Entfernung befinden und eine zusätzliche Dämpfung der Radarwellen beim Passieren der nähergelegenen Gewitterzellen auftritt. Es ist außerdem zu berücksichtigen, dass Hagel in diesem System als sehr starker Regenfall mit Regenraten von zumindest 100 mm/h (55 dBZ) interpretiert wird, so dass Gewitterzellen nicht immer von Hagelgebieten unterschieden werden können.

Daher ist es nicht ohne weiteres möglich, sofort aus dem erfassten Radarbild Aussagen zur Regenmenge treffen zu können. Da jedoch an dem Vorderrand des Regengebietes 210 noch keine Dämpfung auftritt, können die von dort kommenden Signale genutzt werden, um die Regenmenge an dieser Stelle zu bestimmen. Da außerdem angenommen werden kann, dass die Regenmenge im gesamten Gebiet nahezu konstant bleiben sollte, kann aus der am Rand bestimmten Regenmenge die zu erwartende Dämpfung für die Zone 210 ermittelt werden. Diese Dämpfung kann dann wiederum genutzt werden, um eine Korrektur des dargestellten meteorologischen Z-Faktors vorzunehmen.

Daher wird gemäß Ausführungsbeispielen die Verstärkung so gewählt, dass der vordere Rand des Starkregengebietes 210 klar erkennbar bzw. durch das System eindeutig erfassbar ist. Dann wird die empfangene Leistung $P_{th}$ des Radars von dem Vorderrand des Gebietes 210 aus dem Radarbild ermittelt. Mittels dieses Wertes kann der meteorologische Z-Faktor aus den folgenden Gleichungen (1) und (3) berechnet werden:

$$P_{th} = \frac{\beta' \cdot Z}{r_{th}^2} \quad , \tag{1}$$

wobei

$$\beta' = \frac{P_{av} \cdot G_t \cdot G_r \cdot RG_w \cdot \Delta\theta_{az} \cdot \Delta\theta_{el} \cdot \pi^3 \cdot |K|^2}{512 \cdot \ln(2) \cdot \lambda^2 \cdot L_s} \quad . \tag{2}$$

In dieser Gleichung ist:

$P_{av}$    durchschnittliche Übertragungsleistung
Gt    Antennenverstärkung für das Sendesignal
$G_r$    Antennenverstärkung für das Empfangssignal
$\lambda$    Wellenlänge des Übertragungssignals
$r_{th}$    Entfernung zum Zentrum der Gewitterzelle
$L_s$    gemeinsamer Verlustfaktor
$RG_w$    Breite der erfassten Zelle
|K|    die Dämpfung
$\Delta\theta_{az}$    Winkelbereich Azimut
$\Delta\theta_{el}$    Winkelbereich Elevation

Der gesuchte Dämpfungswert K ist in der Gleichung (2) in einer logarithmischen Skala angegeben, sodass der Wert K=1 keine Dämpfung bedeutet. Wie zuvor dargelegt, kann am Vorderrand des Regengebietes 210 angenommen werden, dass dort (noch) keine Dämpfung vorliegt, sodass dort K=1 gesetzt werden kann.

Der meteorologische Z-Faktor ist außerdem über das sogenannte "Clutter-to-Noise" (CNR) - Verhältnis bestimmt, welches wie folgt dargestellt werden kann:

$$CNR_{th} = \frac{P_{th}}{P_n} = \frac{\beta' \cdot Z}{r_{th}^2 \cdot k_B \cdot T_0 \cdot F_n \cdot B_n} \quad , \tag{3}$$

wobei das Rauschniveau $P_n$ definiert ist durch die folgenden Konstanten: Boltzmann-Konstante $k_B$, Rauschtemperatur $T_0$, Empfängerrauschbandbreite $B_n$, Empfängerrauschzahl $F_n$.

Mittels des CNR-Verhältnisses kann dann der Z-Faktor schließlich ausgedrückt werden durch:

$$Z = \frac{CNR_{th} \cdot r_{th}^2 \cdot P_n}{\beta'} \quad , \tag{4}$$

wobei β' in Glg. (2) definiert wurde.

Unter der oben genannten Annahme, dass am Vorderrand der Starkregenzone 210 keine Dämpfung auftritt (K=1), kann somit der Koeffizient β' und daraus direkt der meteorologische Z-Faktor ermittelt werden.

Aus dem meteorologischen Z-Faktor kann die Regenmenge ermittelt werden, wozu beispielsweise die folgenden Definitionen genutzt werden können. Wenn der Z-Faktor in einer logarithmischen Skala (d.h. dBZ) genutzt wird, dann entsprechen folgenden dBZ-Werte den folgenden Regenmengen:

-40...-20:    kein Niederschlag
-20...10:    optisch klare Wetterbedingungen
10...30:    leichter Regen (0,25...1 mm/h)
30...40:    moderater Regen (1..4 mm/h)

40...50:     Starkregen (4...50 mm/h)

50...60:     sehr starker Regen (>50...150 mm/h)

Die so erhaltenen Regenmengen können schließlich zur Abschätzung einer möglichen Korrektur durch die Dämpfung K genutzt werden.

Dies kann beispielsweise unter Nutzung der folgenden Tabelle geschehen:

| λ [cm] Radarband Regenrate [mm/h] | 1.0 $K_a$ | 3.2 X | 10 S |
|---|---|---|---|
| 0.25 | 0.037 | 0.0019 | 0.0000997 |
| 1.25 | 0.228 | 0.0117 | 0.000416 |
| 2.5 | 0.492 | 0.0317 | 0.000785 |
| 12.5 | 2.73 | 0.238 | 0.00364 |
| 25.0 | 5.47 | 0.555 | 0.00728 |
| 50 | 10.7 | 1.26 | 0.0149 |
| 100 | 20.0 | 2.8 | 0.0311 |
| 150 | 28.8 | 4.39 | 0.0481 |

Diese Tabelle gibt Dämpfungsfaktor K in Abhängigkeit einer Regenmenge und einer Wellenlänge λ des genutzten Radarbandes ($K_a$, X oder S) an.

Beispielsweise hat die Dämpfung bei Verwendung des X-Bandradars (eine Wellenlänge λ von ca. 3,2 cm) und einer Regenmenge von 50 mm/h einen Wert von 1,26 dB. Dieser Wert wird nach Umrechnung in die logarithmische Skala genutzt, um den β-Falktor aus Glg. (2) und dadurch wiederum den meteorologischen Z-Faktor zu korrigieren. Diese Vorgehensweise kann sukzessiv vorgenommen werden, bis eine gewünschte Annäherung an die gesuchte Regenmenge und somit den gesuchten meteorologischen Z-Faktor erreicht wird. Es versteht sich, dass die genaue Umrechnung in die logarithmische Skala nicht entscheidend ist, da für den Piloten letztlich die relative Information (wie stark der Regen zunimmt) wichtig ist. Außerdem kann eine entsprechende Eichung vorgesehen sein, um richtige Resultate zu erreichen.

Die Steuerung der Verstärkung, um einen gewünschten Dynamikbereich zu erreichen, erfolgt gemäß Ausführungsbeispielen unter einer gezielten Ansteuerung eines Analog-Digital-Wandlers. So hängt der Dynamikbereich DR nach einer A/D-Wandlung von der Anzahl der genutzten Bits über die folgende Formel ab:

$$DR/dB = 6 \cdot N - 15 \ , \qquad\qquad (4)$$

wobei N die Anzahl der Bits darstellt. Somit ergibt sich eine Mindestanzahl von Bits, die dem gewünschten Dynamikbereich entspricht, wie folgt:

$$N > (DR/db + 15)/6 \ . \qquad\qquad (5)$$

Zum Beispiel ergibt für ein Szenario mit einem CNR-Wert von beispielsweise 45 dB der Dynamikbereich DR= 45 dB + 15 dB = 60dB, sodass mindestens 13 Bits in dem A/D-Konverter zu nutzen wäre.

Wie bereits mehrfach erwähnt, ist es erforderlich, dass die empfangenen Radarsignale nicht mit Reflexionssignalen vom Gelände gestört werden oder konkurrieren, um Sättigungseffekte zu vermeiden und eine Anzeigedynamik zu erreichen, die für die oben genannte Prozedur erforderlich ist. Ausführungsbeispiele der vorliegenden Erfindung wählen daher den Elevationswinkel $\Theta_{el}$ in Abhängigkeit von einer Flughöhe gezielt aus, um so zu erreichen, dass die Radarstrahlen 120 nicht durch Bodenreflexionen gestört werden und die Zone mit starkem Regen 210 (zum Beispiel von einer Gewitterzelle) erfasst wird, ohne Reflexionssignale vom Boden oder Erhebungen zu empfangen.

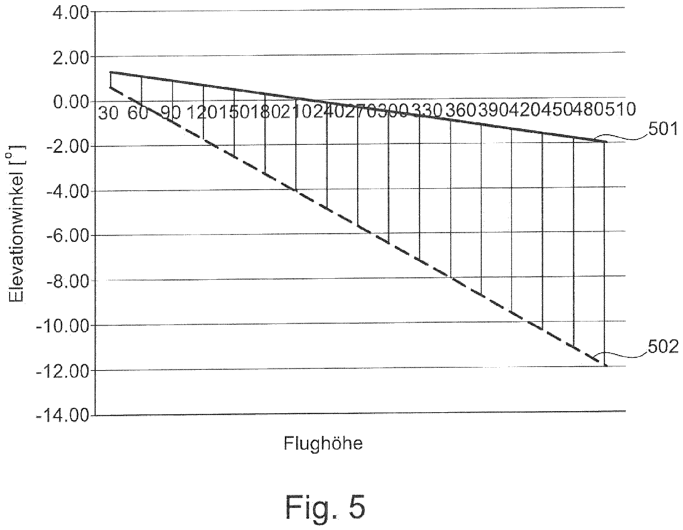

**Fig. 5** zeigt eine Darstellung für minimale Elevationswinkel, der von der Flughöhe FL des Flugzeuges 110 abhängt. Es versteht sich, dass ein weiter nach oben gerichteter Winkel (hin zu positiven Winkel) unschädlich ist, da dies nicht zu Bodenreflexionen führen kann. Das Bordradar kann beispielsweise 2 Modi 501, 502 erlauben, wobei der Modus 501 (z.B. RBGM-Mode 1) eine dargestellte Reichweite von zumindest 74 km liefert und der Modus 502 (z.B.

RBGM-Mode 2) eine dargestellte Reichweite von höchstens 37 km liefert. Aus der gezeigten Darstellung kann der Elevationswinkel $\Theta_{el}$ für die jeweilige Reichweite entnommen werden. Es versteht sich, dass die in der Fig. 5 dargestellte Abhängigkeit auch als eine Tabelle gegeben sein kann. Gemäß Ausführungsbeispielen wird der Elevationswinkel geändert, wenn das Radar an die Endpunkte (Minimalwerte) gelangt.

Es ist weiter von Vorteil, wenn die Bodenstabilisierung des beispielhaften RBGM nicht genutzt wird zum Detektieren von Gewitterzellen (z.B. bei Nutzung der beispielhaften Captor-Radaranalage).

In Abhängigkeit von der gewählten Reichweite der Radaranlage können außerdem Minimalentfernungen zu möglichen Regenzellen mitberücksichtigt werden.

Vorteilhafte Aspekte von Ausführungsbeispielen können durch die folgenden Schritte zusammengefasst werden:

(1) Auswählen des Modus 501, 502, ... (z.B. RBGM 1 oder RBGM 2 Modus),
(2) Abwählen einer Bodenstabilisierung,
(3) Auswählen einer gewünschten dargestellten Reichweitenskalierung,
(4) Wählen des Elevationswinkels oder eines minimalen Elevationswinkels in Abhängigkeit der gewählten Reichweitenskalierung und einer Flughöhe,
(5) Anpassen (automatisch oder auch manuell) einer Verstärkungssteuerung und Einstellen eines Verstärkungswertes zu vorgeschlagenen Anfangswerten in Abhängigkeit der Reichweite und der geschätzten Entfernung zu der Gewitterzelle,
(6) Nachregeln der manuellen Verstärkung, um eine Anzeigedynamik zu verbessern. Es sollten verschiedene Graustufen, die unterschiedlichen Regenmengen entsprechen, sichtbar sein.

(6.1) Verringern des Verstärkungswertes, wenn die Anzeige zu weiß oder zu hell ist.
(6.2) Erhöhen des Verstärkungswertes, wenn die Anzeige zu schwarz oder zu dunkel ist.

Zur Wahl Reichweiteskalierung der Anzeige im Punkt (3) kann weiter Folgendes berücksichtigt werden:
Zur Detektion von Gewitterzellen 210 in einer Reichweite von bis zu 37 km ist es empfohlen, die Anzeigenreichweitenskalierung auf höchstens 37 km zu stellen. Daher wird in diesem Modus die Radaranlage in der beispielhaften RBGM 2 Wellenform genutzt. Die damit verbundene kürzere Reichweite erlaubt es, tiefer nach unten zu schauen, wobei kürzere Pulse genutzt werden, die zu kleineren Minimalentfernungen von bis zu einer nautischen Meile führen. Die Anzeigereichweitenskalierung von 74 km oder mehr kann genutzt werden (z.B. durch Nutzung der RBGM 1-Wellenform), um einen groben Überblick über Regenmengen zu erhalten. Es wird dadurch einfacher zwischen unterschiedlichen Regenmengen in Folge des besseren Kontrastes unterschieden. Außerdem verringert sich das Clutter-Niveau von normalen Regenzellen stärker als das Clutter-Niveau von Gewitterzellen (mit einer Starkregenzone) mit zunehmender Entfernung. Dies bedeutet, dass kleinere Unterschiede in den Regenmengen auf dem Display mit einer ausgewählten größeren Reichweitenskalierung festgestellt werden können. Außerdem können größere Reichweiten zu den Regenzellen oder Gewitterzellen erfasst werden. Bei einer Auswahl der Reichweitenskalierung von 74 km oder mehr beträgt die minimale erfassbare Entfernung ungefähr 18,5 km.

Bei der Anpassung der Verstärkung im Punkt (5) kann weiter Folgendes berücksichtigt werden:
Der Dynamikbereich für die Niveaus der Starkregenzonen 210 in der Anzeige erstreckt sich von Dunkelgrautönen bis hin zu reinen Weißtönen. Er ist jedoch begrenzt. Insbesondere für Gewitterzellen in einer geringen Entfernung kann es sinnvoll sein, eine manuelle Nachsteuerung durchzuführen, um eine Sättigung zu vermeiden. Die Sättigung entspricht beispielsweise einem sehr weißen Display und tritt für unterschiedliche Niederschlagsmengen auf. Wenn es zu einer Sättigung kommt, kann der Verstärkungswert nachjustiert werden. Die Verstärkung kann zum Beispiel solange verringert werden bis der gewünschte Dynamikbereich wiederhergestellt ist, d.h. unterschiedliche Grautönen entsprechen unterschiedlichen Niederschlagsmengen. Dies kann manuell über entsprechende Schnittstellen, aber auch automatisch geschehen (z.B. durch einen Sättigungsdetektor, der einen Sättigungszustand feststellt).

Wenn die RBGM-Anzeige zu dunkel ist wird der Verstärkungswert ebenfalls nachgestellt, d.h. erhöht, um so sicherzustellen das dort keine weiteren Regengebiete vorhanden sind. Hierfür kann die folgende Tabelle genutzt werden:

| dargestellte Reichweite [km] | geschätzte Entfernung zur Gewitterzelle 100 mm/h (55 dBZ) [NM] | manueller Verstärkungswert |
|---|---|---|
| 18,5 | 5 | 55 |
| 37 | 13 | 70 |
| 74 | 27 | 55 |

(fortgesetzt)

| dargestellte Reichweite [km] | geschätzte Entfernung zur Gewitterzelle 100 mm/h (55 dBZ) [NM] | manueller Verstärkungswert |
|---|---|---|
| 148 | 54 | 70 |
| 296 | 100 | 100 |

In dieser Tabelle sind beispielhaft mögliche Anfangswerte für die manuelle Verstärkungsnachregelung in Abhängigkeit der dargestellten Reichweite und der Entfernung zu den Gewitterzellen mit Regenmengen von 100 mm/h (55 dBZ) als Referenzwerte angegeben. Diese manuelle Nachstellung ist insbesondere dann vorteilhaft, wenn die automatische Verstärkungssteuerung automatisch Bodensignale verstärkt.

Die beschriebene Vorgehensweise erlaubt es, Gewitterzellen 210 mit einer (Bord-) Radaranlage zur Geländeerfassung zu detektieren, und zwar zumindest dann, wenn die Gewitterzellen oder zu detektierenden Regionen isoliert sind und dort hinreichend starker Regen fällt (zum Beispiel oberhalb eines gewissen Schwellwertes). Beispielsweise werden die Zellenniveaus mit 15 Graustufen dargestellt werden. Die erreichbare Auflösung bzw. der erforderliche Unterschied ist dann ungefähr 10 dB in dem Reflexionsfaktor dBZ. Dies bedeutet zum Beispiel, dass Regenmengen von 1 mm/h (30 dBZ) und 4 mm/h (40 dBZ) oder Regenmengen von 4 mm/h (40 dBZ) und 50 mm/h (50 dBZ) ebenfalls unterschieden werden können.

Wenn, gemäß Ausführungsbeispielen, keine absoluten Regenmengen dargestellt werden, werden insbesondere die folgenden Effekte berücksichtigt:

- je höher die Regenrate in einer bestimmten Entfernung ist, je heller ist die entsprechende Anzeige dieses Gebietes;
- je näher eine Regenzelle mit einer gleichen Regenrate ist, je heller ist die Anzeige des entsprechenden Bereiches im Display.

Dies kann beispielsweise dadurch berücksichtigt werden, dass nur Unterschiede in den Niveaus der Regenzellen und der Regenraten in Bezug auf benachbarte Gebiete in einer bestimmten Entfernung dargestellt werden.

Es versteht sich, dass die genutzte Radaranlage auf dem Luftfahrzeug kein spezielles Wetterradar ist bzw. einen entsprechenden Wettermodus umfasst, sondern vielmehr eine gewöhnliche Radaranlage ist, die zur Geländeerfassung genutzt wird. Daher arbeitet die Radaranlage beispielsweise in dem X-Band oder Ka-Band, nicht jedoch in dem S-Band, welches normalerweise für Wetterradaranlagen genutzt wird. Das hat zur Folge, dass die Radaranlage typischerweise nicht in der Lage ist, eine absolute Regenmenge darzustellen, sondern lediglich entsprechende Zonen in verschiedenen Grauschattierungen oder Graustufen in Abhängigkeit der Regenmengen und der Reichweite zu den Regenzellen dargestellt werden. Dabei sind Gewitterzellen als Zellen darstellbar, in denen sehr große Regenmengen innerhalb kürzester Zeit herunterkommen. Die Radaranlage ist somit typischerweise nur in der Lage, Unterschiede in den Regenmengen darzustellen, nicht jedoch Absolutwerte, vorausgesetzt, dass die isolierten Gewitterzellen oder Zellen mit großer Regenmenge die umgebenden Gebiete um mehr als einen vorbestimmten Wert überschreiten.

Um diese Funktionen zu erfüllen, wird, wie bereits dargelegt, die Höhe oder der Höhenwinkel entsprechend eingestellt, und zwar derart, dass keine Signale vom Gelände oder vom Boden in der eingestellten Reichweite empfangen werden. So kann beispielsweise der Elevationswinkel so eingestellt werden, dass die empfangenen Signale nur oberhalb des Horizontes empfangen werden oder aber von potenziellen Geländeabschnitten, die weit außerhalb der Reichweite des gewählten Radarmodus liegen.

Außerdem erfolgt eine Steuerung der Verstärkung derart, dass insbesondere Gewitterzellen in kürzerer Entfernung nicht zu einer Übersteuerung führen, um einen Sättigungseffekt des empfangenen Signales zu vermeiden und eine ausreichende Anzeigedynamik zu erreichen.

Bezugszeichenliste

| 50 | Gelände |
|---|---|
| 110 | Luftfahrzeug |
| 120 | Radarstrahlen |
| 210 | Zone mit starkem Regen (zum Beispiel Gewitterzellen) |
| 220 | Niederschlagsgebiet |
| 240 | Mindestabstandsbereich |

501, 502     darstellbare Reichweiten (z.B. RGBM 1 oder RGBM 2)
FL         Flughöhe


**Patentansprüche**

**1.** Verfahren zur Detektion einer Zone (210) mit starkem Niederschlag mittels einer Radarsignal-sendenden Radaranlage, die eine Anzeige aufweist und auf einem Luftfahrzeug (110) zur Erfassung eines Geländes (50) vorgesehen ist, mit folgenden Schritten:

- Einstellen (S110) eines Elevationswinkels ($\Theta_{el}$) in Abhängigkeit von einer Flughöhe (FL) des Luftfahrzeuges (110) oder einer auf der Anzeige darstellbaren Reichweite einer Radarerfassung durch die Radaranlage;
- Empfangen (S120) von den reflektierten Radarsignalen (120) aus der Zone (210) mit starkem Niederschlag;
- Ändern (S130) einer Verstärkung der empfangenen Radarsignale in Abhängigkeit von der darstellbaren Reichweite oder einer geschätzten Entfernung zu der Zone (210) mit starkem Niederschlag, um eine Sättigung bei der Radarerfassung zu vermeiden;
- Ermitteln eines Reflexionsfaktors und basierend darauf einer Niederschlagsmenge;
- Ermitteln (S140) der Zone (210) mit starkem Niederschlag basierend auf dem Reflexionsfaktor für die empfangenen Radarsignale; und
- Darstellen (S150) der Zone (210) mit starkem Niederschlag auf der Anzeige,

**dadurch gekennzeichnet, dass**
das Ermitteln der Niederschlagsmenge eine Korrektur des Reflexionsfaktors basierend auf einer Dämpfung des Radarsignals in der Zone (210) mit starkem Niederschlag umfasst und das Ermitteln der Dämpfung folgende Schritte umfasst:

- Ermitteln einer Vorderfront der Zone mit starkem Niederschlag,
- Ermitteln einer Niederschlagsmenge an der Vorderfront der Zone (210) mit starkem Niederschlag,
- Abschätzen, ob die ermittelte Niederschlagsmenge eine Mindestdämpfung des Radarsignals bewirkt und, wenn ja, Berücksichtigen der Dämpfung bei der Ermittlung des Reflexionsfaktors.

**2.** Verfahren nach Anspruch 1, wobei der Elevationswinkel ($\Theta_{el}$) derart eingestellt wird, dass Reflexionssignale von dem Gelände (50) das Ermitteln der Zone (210) mit starkem Niederschlag nicht verfälschen.

**3.** Verfahren nach einem der vorhergehenden Ansprüche, wobei die Verstärkung derart eingestellt wird, dass auf der Anzeige ein Resultat dargestellt wird, welches ein Mindestmaß an Signaldynamik aufweist.

**4.** Verfahren nach einem der vorhergehenden Ansprüche, wobei das Ermitteln der Niederschlagsmenge über eine Formel oder eine tabellarische Klassifizierung durchgeführt wird.

**5.** Verfahren nach einem der vorhergehenden Ansprüche, wobei der Schritt des Einstellens der Verstärkung in Abhängigkeit von der Dämpfung durchgeführt wird.

**6.** Verfahren nach einem der vorhergehenden Ansprüche, wobei das Verfahren weiter zumindest einen der folgenden Schritte umfasst:

- Auswählen einer Option zur Geländeerfassung an der Radaranlage,
- Deaktivieren einer Bodenstabilisierung,
- Ändern einer dargestellten Reichweite der Radaranlage.

**7.** Verfahren nach Anspruch 6, wobei das Ändern der dargestellten Reichweite eine Reichweite von bis zu 37 km oder eine Reichweite von bis zu 74 km entspricht.

**8.** Vorrichtung für eine Radarsignal-sendende Radaranlage, die Vorrichtung dient zur Detektion einer Zone (210) mit starkem Niederschlag mittels der Radaranlage, die eine Anzeige aufweist und auf einem Luftfahrzeug (110) zur Erfassung eines Geländes (50) vorgesehen ist, die Vorrichtung umfasst folgende Merkmale:

ein Einstellmodul zum Einstellen eines Elevationswinkels ($\Theta_{el}$) in Abhängigkeit von einer Flughöhe (FL) des Luftfahrzeuges (110) oder einer auf der Anzeige darstellbaren Reichweite einer Radarerfassung durch die Radaranlage;

ein Empfangsmodul zum Empfangen von den reflektierten Radarsignalen (120) aus der Zone (210) mit starkem Niederschlag;

ein Steuermodul zur Steuerung einer Verstärkung der empfangenen Radarsignale in Abhängigkeit von der darstellbaren Reichweite oder einer geschätzten Entfernung zu der Zone (210) mit starkem Niederschlag, um eine Sättigung bei der Radarerfassung zu vermeiden;

ein Berechnungsmodul zum Ermitteln eines Reflexionsfaktors und basierend darauf einer Niederschlagsmenge und zum Ermitteln der Zone (210) mit starkem Niederschlag basierend auf dem Reflexionsfaktor für die empfangenen Radarsignale; und

ein Ausgabemodul zum Ausgeben von Daten zur ermittelten Zone (210) mit starkem Niederschlag an die Anzeige, um die Zone (210) mit starkem Niederschlag darzustellen

**dadurch gekennzeichnet, dass**

das Berechnungsmodul ausgebildet ist, bei dem Ermitteln der Niederschlagsmenge eine Korrektur des Reflexionsfaktors basierend auf einer Dämpfung des Radarsignals in der Zone (210) mit starkem Niederschlag zu berücksichtigen und für das Ermitteln der Dämpfung folgende Schritte auszuführen:

Ermitteln einer Vorderfront der Zone mit starkem Niederschlag,
Ermitteln einer Niederschlagsmenge an der Vorderfront der Zone (210) mit starkem Niederschlag,
Abschätzen, ob die ermittelte Niederschlagsmenge eine Mindestdämpfung des Radarsignals bewirkt und, wenn ja, Berücksichtigen der Dämpfung bei der Ermittlung des Reflexionsfaktors.

9. Radaranlage mit einer Vorrichtung nach Anspruch 8 für die Radaranlage, wobei die Radaranlage ausgebildet ist, um Radarsignale mit einer Wellenlänge von weniger als 8 cm oder weniger als 5 cm und insbesondere im X-Band oder im Ku-Band oder im K-Band oder im Ka-Band zur Radarerfassung zu nutzen.

10. Computerprogrammprodukt mit darauf gespeicherter Software, die ausgebildet ist, um das Verfahren nach einem der Ansprüche 1 bis 7 auszuführen, wenn die Software auf einer Steuereinheit der Radaranlage nach Anspruch 9 ausgeführt wird.

**Claims**

1. A method for detecting a zone (210) with heavy precipitation by means of a radar-signal-transmitting radar system which has a display and is provided on an aircraft (110) for detecting a terrain (50), comprising the following steps:

- adjusting (S110) an elevation angle ($\Theta_{el}$) on the basis of an altitude (FL) of the aircraft (110) or a range of a radar detection by the radar system that can be displayed on the display;
- receiving (S120) the reflected
radar signals (120) from the zone (210) with heavy precipitation;
- changing (S130) a gain of the received radar signals on the basis of the displayable range or an estimated distance from the zone (210) with heavy precipitation in order to avoid saturation in the radar detection;
- determining a reflection factor and, based thereon, an amount of precipitation;
- determining (S140) the zone (210) with heavy precipitation based on the reflection factor for the received radar signals; and
- displaying (S150) the zone (210) with heavy precipitation on the display,

**characterized in that**

the determination of the amount of precipitation comprises a correction of the reflection factor based on an attenuation of the radar signal in the zone (210) with heavy precipitation and the determination of the attenuation comprises the following steps:

- determining a front of the zone with heavy precipitation,
- determining an amount of precipitation at the front of the zone (210) with heavy precipitation,
- estimating whether the determined amount of precipitation causes a minimum attenuation of the radar signal and, if so, taking the attenuation into account when determining the reflection factor.

2. The method according to claim 1, wherein the elevation angle ($\Theta_{el}$) is adjusted in such a way that reflection signals from the terrain (50) do not falsify the determination of the zone (210) with heavy precipitation.

3. The method according to either of the preceding claims, wherein the gain is adjusted in such a way that, on the display, a result is displayed which has a minimum signal dynamic.

4. The method according to any of the preceding claims, wherein the determination of the amount of precipitation is carried out using a formula or a tabular classification.

5. The method according to any of the preceding claims, wherein the step of adjusting the gain is carried out on the basis of the attenuation.

6. The method according to any of the preceding claims, wherein the method further comprises at least one of the following steps:

   - selecting an option for terrain detection on the radar system,
   - deactivating a ground stabilization,
   - changing a displayed range of the radar system.

7. The method according to claim 6, wherein changing the displayed range corresponds to a range of up to 37 km or a range of up to 74 km.

8. A device for a radar-signal-transmitting radar system, the device being used for detecting a zone (210) with heavy precipitation by means of the radar system, which system has a display and is provided on an aircraft (110) for detecting a terrain (50), the device comprising the following features:

   an adjusting module for adjusting an elevation angle ($\Theta_{el}$) on the basis of an altitude (FL) of the aircraft (110) or a range of a radar detection by the radar system that can be displayed on the display;
   a receiving module for receiving the reflected radar signals (120) from the zone (210) with heavy precipitation;
   a control module for controlling a gain of the received radar signals on the basis of the displayable range or an estimated distance from the zone (210) with heavy precipitation in order to avoid saturation in the radar detection;
   a calculation module for determining a reflection factor and, based thereon, an amount of precipitation, and for determining the zone (210) with heavy precipitation based on the reflection factor for the received radar signals; and
   an output module for outputting data on the determined zone (210) with heavy precipitation to the display in order to display the zone (210) with heavy precipitation **characterized in that**
   the calculation module is designed, when determining the amount of precipitation, to take into account a correction of the reflection factor based on an attenuation of the radar signal in the zone (210) with heavy precipitation and to carry out the following steps for determining the attenuation:

   determining a front of the zone with heavy precipitation,
   determining an amount of precipitation at the front of the zone (210) with heavy precipitation,
   estimating whether the determined amount of precipitation causes a minimum attenuation of the radar signal and, if so, taking the attenuation into account when determining the reflection factor.

9. A radar system comprising a device according to claim 8 for the radar system, wherein the radar system is designed to use radar signals with a wavelength of less than 8 cm or less than 5 cm and in particular in the X band or in the Ku band or in the K band or in the Ka band for radar detection.

10. A computer program product with software stored thereon, which is designed to execute the method according to any of claims 1 to 7 when the software is executed on a control unit of the radar system according to claim 9.

**Revendications**

1. Procédé de détection d'une zone (210) à fortes précipitations au moyen d'un système radar émetteur de signal radar, lequel présente un écran et est prévu sur un aéronef (110) pour détecter un terrain (50), comportant les étapes suivantes :

- réglage (S110) d'un angle d'élévation ($\Theta_{el}$) en fonction d'une altitude (FL) de l'aéronef (110) ou d'une portée de détection radar par le système radar pouvant être affichée sur l'écran ;
- réception (S120) des signaux radar réfléchis (120) à partir de la zone (210) à fortes précipitations ;
- modification (S130) d'une amplification des signaux radar reçus en fonction de la portée affichable ou d'une distance estimée de la zone (210) à fortes précipitations afin d'éviter une saturation dans la détection radar ;
- détermination d'un facteur de réflexion et, sur la base de celui-ci, d'une quantité de précipitations ;
- détermination (S140) de la zone (210) à fortes précipitations sur la base du facteur de réflexion pour les signaux radar reçus ; et
- affichage (S150) de la zone (210) à fortes précipitations sur l'écran,

**caractérisé en ce que**
la détermination de la quantité de précipitations comprend une correction du facteur de réflexion sur la base d'une atténuation du signal radar dans la zone (210) à fortes précipitations et la détermination de l'atténuation comprend les étapes suivantes :

- détermination d'un front avant de la zone à fortes précipitations,
- détermination d'une quantité de précipitations au niveau du front avant de la zone (210) à fortes précipitations,
- estimation du fait de savoir si la quantité de précipitations déterminée provoque une atténuation minimale du signal radar et, si c'est le cas, la prise en compte de l'atténuation lors de la détermination du facteur de réflexion.

2. Procédé selon la revendication 1, dans lequel l'angle d'élévation ($\Theta_{el}$) est réglé de telle sorte que les signaux de réflexion du terrain (50) ne faussent pas la détermination de la zone (210) à fortes précipitations.

3. Procédé selon l'une des revendications précédentes, dans lequel l'amplification est réglée de telle sorte qu'un résultat qui présente un niveau minimal de dynamique de signal est affiché sur l'écran.

4. Procédé selon l'une des revendications précédentes, dans lequel la détermination de la quantité de précipitations est effectuée à l'aide d'une formule ou d'une classification tabulaire.

5. Procédé selon l'une des revendications précédentes, dans lequel l'étape de réglage de l'amplification est effectuée en fonction de l'atténuation.

6. Procédé selon l'une des revendications précédentes, dans lequel le procédé comprend en outre au moins l'une des étapes suivantes :

- sélection d'une option de détection de terrain sur le système radar,
- désactivation d'une stabilisation des sols,
- modification d'une portée affichée du système radar.

7. Procédé selon la revendication 6, dans lequel la modification de la portée affichée correspond à une portée allant jusqu'à 37 km ou une portée allant jusqu'à 74 km.

8. Dispositif destiné à un système radar émetteur de signal radar, le dispositif étant utilisé pour la détection d'une zone (210) à fortes précipitations au moyen du système radar, lequel présente un écran et est prévu sur un aéronef (110) pour détecter un terrain (50), le dispositif comprenant les caractéristiques suivantes :

un module de réglage permettant de régler un angle d'élévation ($\Theta_{el}$) en fonction d'une altitude (FL) de l'aéronef (110) ou d'une portée de détection radar par le système radar pouvant être affichée sur l'écran ;
un module de réception permettant de recevoir les signaux radar réfléchis (120) à partir de la zone (210) à fortes précipitations ;
un module de commande permettant de commander une amplification des signaux radar reçus en fonction de la portée affichable ou d'une distance estimée de la zone (210) à fortes précipitations afin d'éviter une saturation dans la détection radar ;
un module de calcul permettant de déterminer un facteur de réflexion et, sur la base de celui-ci, une quantité de précipitations, et permettant de déterminer la zone (210) à fortes précipitations sur la base du facteur de réflexion pour les signaux radar reçus ; et
un module de sortie permettant de délivrer en sortie des données sur la zone (210) à fortes précipitations déterminée à l'écran afin d'afficher la zone (210) à fortes précipitations

**caractérisé en ce que**

le module de calcul est configuré pour prendre en compte une correction du facteur de réflexion sur la base d'une atténuation du signal radar dans la zone (210) à fortes précipitations lors de la détermination de la quantité de précipitations et pour exécuter les étapes suivantes pour déterminer l'atténuation :

détermination d'un front avant de la zone à fortes précipitations,

détermination d'une quantité de précipitations au niveau du front avant de la zone (210) à fortes précipitations,

estimation du fait de savoir si la quantité de précipitations déterminée provoque une atténuation minimale du signal radar et, si c'est le cas, la prise en compte de l'atténuation lors de la détermination du facteur de réflexion.

9. Système radar comportant un dispositif selon la revendication 8 destiné au système radar, dans lequel le système radar est conçu pour utiliser des signaux radar de longueur d'onde inférieure à 8 cm ou inférieure à 5 cm et en particulier dans la bande X ou dans la bande Ku ou dans la bande K ou dans la bande Ka pour la détection radar.

10. Produit programme informatique sur lequel est stocké un logiciel, lequel est configuré pour exécuter le procédé selon l'une des revendications 1 à 7 lorsque le logiciel est exécuté sur une unité de commande du système radar selon la revendication 9.

```
┌─────────────────────────────────────────┐
│ Einstellen eines Elevationswinkels in    │        S110
│ Abhängigkeit von einer Flughöhe des      │
│ Luftfahrzeuges oder einer auf der Anzeige│
│ darstellbaren Reichweite einer           │
│ Radarerfassung durch die Radaranlage     │
└─────────────────────────────────────────┘
                    │
                    ▼
┌─────────────────────────────────────────┐
│ Empfangen von Radarsignalen aus der Zone │        S120
│ mit starkem Niederschlag                 │
└─────────────────────────────────────────┘
                    │
                    ▼
┌─────────────────────────────────────────┐
│ Ändern einer Verstärkung der empfangenen │        S130
│ Radarsignale in Abhängigkeit von der     │
│ darstellbaren Reichweite oder einer      │
│ geschätzten Entfernung zu der            │
│ Zone mit starkem Niederschlag            │
└─────────────────────────────────────────┘
                    │                               S140
                    ▼
┌─────────────────────────────────────────┐
│ Ermitteln der Zone mit starkem Niederschlag│
│ basierend auf einem Reflexionsfaktor für │
│ die empfangenen Radarsignale             │
└─────────────────────────────────────────┘
                    │                               S150
                    ▼
┌─────────────────────────────────────────┐
│ Darstellen der Zone mit starken          │
│ Niederschlag auf der Anzeige             │
└─────────────────────────────────────────┘
```

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DAVID MARCONNET.** Optimum use of weather radar. *Safety first#22, The Airbus safety magazine*